# EUROPÄISCHE PATENTSCHRIFT

(11) **EP 1 652 258 B1**
(45) Veröffentlichungstag und Bekanntmachung des Hinweises auf die Patenterteilung: **15.09.2010**
(21) Anmeldenummer: 04741011.3
(22) Anmeldetag: 14.07.2004
(51) Int. Cl.: H01M 8/10, H01M 8/02, C25B 9/10, C25B 1/10

(54) **MEMBRAN-ELEKTRODEN-EINHEIT FÜR DIE WASSERELEKTROLYSE**
MEMBRANE-ELECTRODE UNIT FOR THE ELECTROLYSIS OF WATER
UNITE MEMBRANE-ELECTRODES POUR ELECTROLYSE DE L'EAU

(30) Priorität: 14.07.2003 DE 10331836; 30.10.2003 US 699158
(43) Veröffentlichungstag der Anmeldung: 03.05.2006
(73) Patentinhaber: Umicore AG & Co. KG, 63457 Hanau-Wolfgang (DE)
(72) Erfinder: ZUBER, Ralf, 64823 Gross-Umstadt (DE); SCHAACK, Klaus, 63785 Obernburg (DE); WITTPAHL, Sandra, 91074 Herzogenaurach (DE); DZIALLAS, Holger, 63452 Hanau (DE); SEIPEL, Peter, 63755 Alzenau (DE); BRAUN, Pia, 63505 Langenselbold (DE); ROHLAND, Lutz, 63457 Hanau-Grossauheim (DE)
(74) Vertreter: Vossius & Partner
(86) Internationale Anmeldenummer: PCT/EP2004/007802
(87) Internationale Veröffentlichungsnummer: WO 2005/006480

(56) Entgegenhaltungen:
- EP-A- 1 289 042
- US-A1- 2002 079 235
- US-B1- 6 197 147
- PATENT ABSTRACTS OF JAPAN Bd. 1997, Nr. 07, 31. Juli 1997 (1997-07-31) -& JP 09 063622 A (MITSUBISHI ELECTRIC CORP), 7. März 1997 (1997-03-07)

## Beschreibung

Die vorliegende Erfindung beschreibt eine Membran-Elektroden-Einheit ("MEE") zum Einsatz in PEM-Wasserelektrolyseuren. Darüberhinaus kann die Membran-Elektroden-Einheit auch für regenerative Brennstoffzellen (RBZ) oder für sauerstofferzeugende Elektroden in verschiedenen anderen Anwendungsbereichen der Elektrolyse verwendet werden. Weiterhin wird ein Verfahren zur Herstellung der Membran-Elektroden-Einheit beschrieben.

In einer zukünftigen Energiewirtschaft, die auf erneuerbaren Ressourcen beruht, wird sich Wasserstoff zu einem wichtigen Energieträger entwickeln. Die Elektrolyse von Wasser ist das praktikabelste Verfahren, um Wasserstoff unter Verwendung von erneuerbaren Energiequellen zu produzieren. Die Investitions- und Produktionskosten für Elektrolyseure bestimmen die gesamte Wirtschaftlichkeit des Systems und entscheiden daher, ob dies ein gangbarer Prozess für die Erzeugung von Wasserstoff wird. Die Kosten einer Produktion von Wasserstoff durch die Elektrolyse von Wasser werden in großem Umfang durch den Verbrauch von elektrischer Energie beeinflusst, der sich auf etwa 70 % der gesamten Kosten für die Produktion von Wasserstoff belaufen kann.

Gemäß dem derzeitigen Stand der Technik werden üblicherweise zwei unterschiedliche Zelltypen für die Elektrolyse von Wasser verwendet, nämlich alkalische Elektrolyseure sowie Elektrolyseure, die mit einer Polymerelektrolytmembran ("PEM") versehen sind. Wasserelektrolyseure, die eine PEM in Verbindung mit Edelmetallkatalysatoren nutzen, sind in der Lage, bei wesentlich größeren Stromdichten und mit einem geringeren spezifischen Energieverbrauch im Vergleich zu herkömmlichen, alkalihaltigen Elektrolyseuren zu arbeiten, so dass sie sich durch den Vorteil einer höheren Auslastung der Anlagen und niedrigeren Produktionskosten auszeichnen. Daher zielt die vorliegende Erfindung darauf ab, das Verfahren der Wasserelektrolyse mittels PEM-Elektrolyseuren zu verbessern und insbesondere verbesserte Membran-Elektroden-Einheiten (MEEs) für PEM-Elektrolyseure bereitzustellen.

Im allgemeinen sind PEM-Elektrolyseure ähnlich wie eine PEM-Brennstoffzelle aufgebaut, sie arbeiten jedoch in unterschiedlicher Weise. Während des Betriebs der PEM-Brennstoffzelle findet eine Reduktion des Sauerstoffs an der Kathode und eine Oxidation des Wasserstoffs an der Anode der Brennstoffzelle statt. Im Endeffekt wird Wasser und elektrischer Strom erzeugt. In einem PEM-Elektrolyseur werden Stromfluss und Elektroden dagegen umgekehrt, so dass eine Zerlegung des Wassers stattfindet.

Die Freisetzung des Sauerstoffs erfolgt an der Anode (abgekürzt "OER" von engl. "oxygen evolution reaction") und die Reduktion der Protonen (H⁺), welche die Polymerelektrolytmembran passieren, findet an der Kathode statt (abgekürzt "HER" von engl. "hydrogen evolution reaction"). Als Ergebnis wird Wasser mit Hilfe von Strom in Wasserstoff und Sauerstoff zerlegt. Die Reaktionen können in den folgenden Gleichungen zusammengefasst werden:

2 H₂O => O₂ + 4 H⁺ + 4 e- (OER)

4H+4e- => 2 H₂ (HER)

Eine MEE für einen PEM-Wasserelektrolyseur (im folgenden auch als "Elektrolyse-MEE" bezeichnet) enthält im allgemeinen eine Polymerelektrolytmembran (zum Beispiel Nafion® von DuPont), die in Sandwichbauweise zwischen zwei Elektroden und zwei porösen Stromkollektoren (bzw. Gasverteilersubstrate), die jeweils auf beiden Seiten der Elektroden montiert sind, angeordnet ist.

Aufgrund der unterschiedlichen Anforderungen an Elektrolyse-MEEs sowie der unterschiedlichen Betriebsbedingungen von Elektrolyseuren und herkömmlichen PEM-Brennstoffzellen gibt es jedoch wichtige Unterschiede im Anforderungsprofil an Elektrolyse-MEEs:
(a) Aufgrund der Korrosion durch den in der OER auf der Anodenseite entstehenden Sauerstoff können Materialien auf der Basis von Kohlenstoff (wie beispielsweise russgeträgerte Pt/C-Katalysatoren oder kohlefaserbasierende Gasverteilersubstrate, engl. "gas diffusion layers"; "GDLs"), auf der Anodenseite einer Elektrolyse-MEE nicht verwendet werden.
(b) Man betreibt den Elektrolyseprozess auf der Wasserstoffseite häufig unter Druck, um eine Vorverdichtung für die Speicherung des Wasserstoffes vorzunehmen. Derzeit werden Drücke von bis zu 15 bar, in Ausnahmefällen bis 30 bar, erreicht. Dies bedeutet, dass die Elektrolyse-MEE einem Differenzdruck zwischen Anode und Kathode ausgesetzt ist, der ca. 5 bis 10 mal höher liegt als beim Betrieb einer herkömmlichen PEM-Brennstoffzelle. Dies stellt erhöhte Anforderungen an die Stabilität und Druckbeständigkeit der MEE. Vorzugsweise werden daher dickere Membranmaterialien verwendet (bis zu 200 µm Dicke). Zur Erhöhung der Druckstabilität sind jedoch auch neue MEE-Aufbaukonzepte notwendig, wie sie in der vorliegenden Anmeldung beschrieben werden.
(c) Da während des Elektrolyseprozesses neben Wasserstoff auch Sauerstoff entsteht, ist die latente Gefahr einer Knallgasexplosion bei einer Leckage gegeben Die Reaktanten müssen strikt voneinander getrennt werden, um solche Effekte zu vermeiden. Es werden daher erhöhte Anforderungen an die Gasdichtheit der Elektrolyse-MEEs gestellt.
(d) Weiterhin müssen für Elektrolyse-MEEs andere Katalysatoren verwendet werden. Iridium ist bekannt für seine einzigartigen elektrokatalytischen Eigenschaften in bezug auf Prozesse zur Freisetzung von Chlor und Sauerstoff. Daher ist Iridium das bevorzugte Material für die Sauerstoffentwicklungsreaktion (OER) an der Anodenseite und zwar entweder in der Form des reinen Metalls (als "Mohr") oder als Oxid, ggf. in Mischung mit anderen Oxiden. Geeignete Anodenkatalysatoren für Elektrolyse-MEEs sind beispielsweise in der Deutschen Patentanmeldung P 1 0350 563.6 der Anmelderin beschrieben. Platin ist von allen Edelmetallen der aktivste Katalysator für die Reaktion zur Freisetzung des Wasserstoffs (HER) an der Kathode und wird in Elektrolyse-MEEs häufig als Kathodenkatalysator verwendet.

Aus diesen Gründen sind konventionelle MEEs, wie sie für PEM-Brennstoffzellen verwendet werden, für PEM-Elektrolyseure nicht einsetzbar.

Aus der Patentliteratur sind verschiedene Vorschläge zum Aufbau von Elektrolyse-MEEs bekannt geworden siehe EP1289042 und JP09063622. Die US 2003/0057088 A1 beschreibt einen PEM-Wasserelektrolyseur, der MEEs enthält, die aus einer Ionomermembran, zwei Katalysatorschichten und einem Paar von porösen Stromverteilern bestehen und sandwichartig zwischen zwei Elektrodenplatten gepresst sind. Die Katalysatorschichten werden auf Vorder- und Rückseite der Membran im TransferdruckVerfahren ("Decal"-Verfahren) aufgebracht. Die Katalysatorschichten, die Gasverteilersubstrate und die Membran haben dieselben Dimensionen ("co-extensives Design"), die Verwendung von Dichtungen wird nicht beschrieben.

In der WO 02/27845 A2 wird eine Wasserelektrolysezelle offenbart, die ein integriertes Stütz- und Rahmengewebe für die Ionomermembran enthält ("integral membrane support and frame structure"). Die Katalysatorschichten sind auf beiden Seiten der Membran aufgebracht, wobei große Anteile der Membran im Randbereich nicht beschichtet sind. Hierdurch entsteht ein erheblicher Mehrverbrauch an teurer Ionomermembran, was zu höheren Kosten des PEM-Elektrolyseurs führt.

Die US 6,613,215 B2 beschreibt einen PEM-Elektrolyseur, der eine ultradünne Compositmembran enthält. Anoden- und Kathodenkatalysator sind auf Vorder- bzw. Rückseite der Membran aufgebracht, wobei wiederum große Anteile der Membran nicht beschichtet sind und dadurch Mehrkosten verursacht werden.

Die Herstellungsverfahren für Elektrolyse-MEAs ähneln grundsätzlich den Verfahren zur Herstellung von konventionellen Membran-Elektroden-Einheiten (MEE) für PEM-Brennstoffzellen. In der Regel werden Katalysatortinten, die Katalysatorpulver, Lösemittel und optional Polymerelektrolytmaterial (d.h. ein gelöstes Ionomer) umfassen, hergestellt und entweder direkt auf die Ionomermembran aufgebracht oder zunächst auf das Gasverteilersubstrat appliziert und dann mit der Membran verbunden (siehe hierzu beispielsweise die Patente US 5,861,222; US 6,309,772 und US 6,500,217 der Anmelderin). Insbesondere bei der beidseitigen Beschichtung der Ionomermembranen treten Probleme mit der Passergenauigkeit und Dimensionsstabilität der Motive auf.

Es war daher das Ziel der vorliegenden Erfindung, eine Elektrolyse-MEE bereitzustellen, die aufgrund ihres Aufbaues eine verbesserte Druckstabilität bei hohen Differenzdrucken (bis zu 30 bar) aufweist sowie eine verbesserte Gasdichtheit besitzt. Die Elektrolyse-MEE sollte in einem einfachen, kostengünstigen Prozess ohne hohen Membranverbrauch herstellbar sein. Das Verfahren sollte geringe Fehlertoleranzen und eine hohe Passergenauigkeit aufweisen und damit für eine Massenfertigung geeignet sein.

Diese Aufgabe wird durch die Bereitstellung einer erfindungsgemäßen MEE gemäß den Ansprüchen 1 und 7 gelöst. Bevorzugte Ausführungsformen sind in den Unteransprüchen beschrieben. Weitere Ansprüche betreffen das Herstellverfahren sowie die Verwendung der erfindungsgemäßen Produkte.

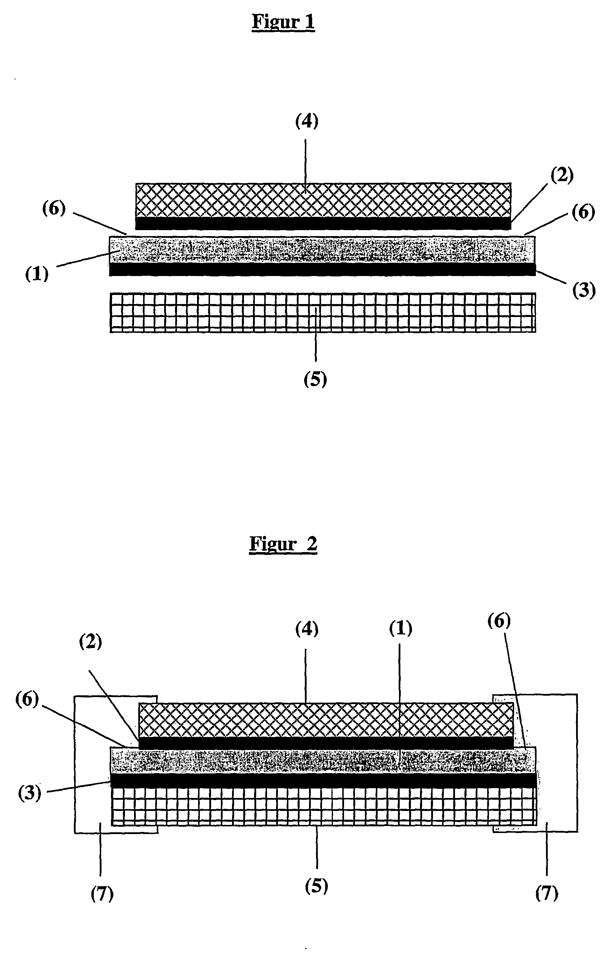

Die erfindungsgemäße Membran-Elektroden-Einheit zur Elektrolyse von Wasser ist in **Figur 1** dargestellt, wobei die einzelne Komponenten schematisch vor dem Zusammenfügen gezeigt sind. Die MEE enthält eine ionenleitende Membran mit Vorder- und Rückseite (1), eine erste Katalysatorschicht auf der Vorderseite (Kathodenseite) zur Wasserstoffentwicklung (2), ein erstes Gasverteilersubstrat auf der Vorderseite (4), eine zweite Katalysatorschicht auf der Rückseite (Anodenseite) zur anodischen Sauerstoffentwicklung (3), sowie ein zweites Gasverteilersubstrat auf der Rückseite (5). Dabei besitzt das erste Gasverteilersubstrat (4) eine geringere flächige Ausdehnung als die ionenleitende Membran (1) und das zweite Gasverteilersubstrat (5) weist im wesentlichen die gleiche flächige Ausdehnung wie die ionenleitende Membran (1) auf.

**Figur 2** zeigt die erfindungsgemäße Elektrolyse-MEE in zusammengefügten Zustand (5-lagiger Aufbau). Das Dichtungsmaterial im Randbereich (7) umschließt die MEE gasdicht und weist aufgrund der freien Membranoberfläche (6) eine verbesserte Haftfestigkeit und Gasdichtheit auf. Ein Mehrverbrauch von Membranmaterial zu Abdichtungszwecken im Randbereich wird vermieden.

In einer weiteren Ausführungsform kann das Gasverteilersubstrat (5) jedoch entfallen. In diesem Fall erhält man eine MEE, enthaltend eine ionenleitende Membran mit Vorder- und Rückseite (1), eine erste Katalysatorschicht auf der Vorderseite (2), ein erstes Gasverteilersubstrat auf der Vorderseite (4) sowie eine zweite Katalysatorschicht auf der Rückseite (3). Diese 4-lagige MEE wird von einem Dichtungsmaterial (7) im Randbereich umfasst. Es entsteht kein Mehrverbrauch an Membranmaterial im Randbereich.

In beiden Ausführungsformen enthält die erfindungsgemäße MEE einen freien, nicht von einem Gasverteilersubstrat gestützten Membranrand (6). Der Randbereich, d.h. der Abstand von der Außenkante der Membran (1) zur Außenkante der kleineren Gasverteilersubstrates (4) auf der Kathodenseite ist klein und besitzt in der zusammengefügten Membran-Elektroden-Einheit eine Breite von mindestens 0,5 mm umlaufend, vorzugsweise eine Breite von mindestens 1 mm. Aus Kostengründen sollte die Randbreite auf maximal 5 mm umlaufend begrenzt sein.

Die erfindungsgemäße Elektrolyse-MEE besitzt als 5-lagige MEE ein sogenanntes "semicoextensives Design" in Hinblick auf die beiden Gasverteilersubstrate (4) und (5). Bei einem "co-extensiven" Design (wie es beispielsweise in US 2003/0057088 A1 beschrieben ist), bedecken die beiden Gasverteilersubstrate die Ionomermembran vollständig, d.h. die Membran und die Gasverteilersubstrate weisen die gleichen Abmessungen auf und sind gleich groß. Ein freier, nicht von einem Gasverteilersubstrat gestützter Membranrand liegt bei diesem co-extensiven Design nicht vor (vgl. hierzu auch US 5,176,966 ).

Es hat sich überraschenderweise gezeigt, dass gerade durch das "semi-coextensive Design" bzw. durch das Vorhandensein der freien Membranoberfläche (6) eine wesentlich verbesserte Druckstabilität der Elektrolyse-MEE bei hohen Differenzdrucken erzielt wird. Weiterhin erhält man eine deutlich bessere Gasdichtheit bei der Abdichtung bzw. Versiegelung des Randbereiches der Membran-Elektroden-Einheit. Dies ist, wie bereits ausgeführt, für die Verwendung der Elektrolyse-MEEs in PEM-Elektrolyseuren von großer Bedeutung.

Ein weiterer Vorteil der erfindungsgemäßen Elektrolyse-MEE ist, daß sie aufgrund des beschriebenen Aufbaus eine stabile, gut handhabbare Struktur besitzt. Die beiden Katalysatorschichten bzw. Elektroden der Membran-Elektroden-Einheit sind im Randbereich aufgrund des erfindungsgemäßen Aufbaues räumlich weiter voneinander getrennt. Die Kurzschlußgefahr ist deutlich reduziert. Bei den nachfolgenden Verarbeitungsschritten (z.B. beim Anbringen des Dichtungsmaterials) besteht nicht die Gefahr, daß die Pole z.B. durch Fasern aus den Gasverteilersubstraten kurzgeschlossen werden.

Aufgrund der geringen Breite der freien Membranoberfläche (6) wird der Membranverbrauch begrenzt. Dies führt zu erheblichen Kosteneinsparungen gegenüber herkömmlichen MEE-Produkten.

Das "semi-coextensive Design" für Membran-Elektroden-Einheiten, die allgemein für elektrochemische Vorrichtungen, insbesondere PEM-Brennstoff zellen Verwendung finden, wurde bereits in der nicht vorveröffentlichten Deutschen Patentanmeldung P 103 31 836.4 (Anmeldetag 14. Juli 2004) beschrieben.

Das Herstellverfahren für die erfindungsgemäßen Elektrolyse-MEEs besteht aus einem kombinierten Prozess von Membranbeschichtung ("CCM-Verfahren") und Gasverteilersubstrat-Beschichtung ("CCB-Verfahren"), wobei beide Substrate jeweils nur einseitig mit Katalysator beschichtet werden. Damit werden die Probleme der Passergenauigkeit und Dimensionsstabilität bei mehrseitigem Druck vermieden. Zur Erzielung einer höheren Katalysatorbeladung kann jedoch eine Seite des Substrates mehrfach beschichtet werden.

Für die Herstellung der Membran-Elektroden-Einheiten werden die Edelmetallkatalysatoren zu Tinten oder Pasten verarbeitet, und zwar unter Verwendung geeigneter Lösemittel und ggf. unter Zusatz von Ionomermaterialien. Der Katalysator für die Kathode wird auf ein Gasverteilersubstrat, der Katalysator für die Anode direkt auf die Ionomermembran aufgebracht. Die typische Katalysatorbeladung der Anode liegt im Bereich von 0,5 bis 4 mg Edelmetall/cm², vorzugsweise setzt man hier Ir- bzw. Ir-Oxid-haltige Katalysatoren ein. Auf der Kathodenseite verwendet man standardmäßige Platinkatalysatoren (z.B. Pt/C oder Pt-Mohr). Die Kathodenbeladungen liegen im Bereich von 0,2 bis 1 mg Pt/cm². Im allgemeinen wird danach ein Trocknungsprozess durchgeführt, um die Lösungsmittel aus den Katalysatortinten zu entfernen.

Die kohlenstoffbasierten Gasverteilersubstrate für die Kathode können aus porösen, elektrisch leitfähigen Materialien wie beispielsweise graphitierten oder carbonisierten Kohlefaserpapieren, Kohlefaservliesen, Kohlefasergeweben und oder/und ähnlichem bestehen. Das nicht-kohlenstoffbasierte Gasverteilersubstrat auf der Anodenseite kann ein Metallgewebe, Metallnetz, Metallvlies, Metall-Stapelfaser, Metall-Mulitfilament und/oder eine andere poröse metallische Struktur enthalten. Es können zum Beispiel Titansinterplatten (Typ SIKA-T10®, Fa. GKN, Radevormwald) eingesetzt werden.

Die ionenleitende Membran besteht in der Regel aus protonenleitenden Polymermaterialien. Bevorzugt wird ein Tetrafluorethylen-Fluor-vinylether-Copolymer mit Sulfonsäuregruppen verwendet. Dieses Material wird unter dem Handelsnamen Nafion^{®} von DuPont vertrieben. Es sind jedoch auch andere, insbesondere fluorfreie Ionomermaterialien, wie dotierte sulfonierte Polyetherketone oder dotierte sulfonierte oder sulfinierte Arylketone sowie dotierte Polybenzimidazole einsetzbar. Compositmembranen, verstärkte Membranen, keramische Membranen sowie mehrschichtige Membranmaterialien können ebenfalls verwendet werden.

Zur Abdichtung bzw. Umrandung der erfindungsgemäßen Membran-Elektroden-Einheiten können organische Polymere eingesetzt werden, die unter den Arbeitsbedingungen der Wasser-Elektrolyse inert sind und keine störenden Substanzen absondern. Die Polymere müssen in der Lage sein, die Gasverteilersubstrate gasdicht zu umschließen. Weitere wichtige Anforderungen an solche Polymere sind ein gutes Adhäsionsvermögen sowie gute Benetzungseigenschaften zur freien Oberfläche der ionenleitenden Membran. Geeignete Materialien sind zum einen thermoplastische Polymere wie beispielsweise Polyethylen, Polypropylen, PTFE, PVDF, Polyamid, Polyimid, Polyurethan oder Polyester; zum anderen auch duroplastische Polymere wie beispielsweise Epoxidharze oder Cyanacrylate. Weiterhin geeignet sind Elastomere, wie beispielsweise Silikonkautschuk, EPDM, Fluor-Elastomere, Perfluor-Elastomere, Chloropren-Elastomere und Fluorsilikon-Elastomere.

Beim Einsatz von vorgeschnittenen Folien zum Abdichten bzw. zur Umrandung der erfindungsgemäßen Membran-Elektroden-Einheit kann diese zwischen zwei entsprechend vorgeschnittenen Rahmen aus thermoplastischem Material in eine Presse eingelegt werden. Die Rahmen werden so geschnitten, daß sie mit ihrem inneren Ausschnitt die Gestalt der jeweiligen aktiven Fläche möglichst genau umfassen. Das polymere Folienmaterial wird dann unter Anwendung von Hitze und Druck aufgeschmolzen. Es umfaßt danach den äußeren Bereich der semicoextensiven Gasverteilersubstrate sowie die freie Oberfläche der Membran stoffschlüssig.

Die Gasverteilersubstrate (4, 5) der erfindungsgemäßen Elektrolyse-MEE können weiterhin noch in ihrem peripheren Bereich mit Polymermaterial gasdicht imprägniert werden. Dazu können Rahmen aus thermoplastischem Polymer so zugeschnitten werden, daß sie mit ihrem inneren Ausschnitt die Gestalt der jeweiligen aktiven Fläche möglichst genau umfassen. Die Gesamthöhe der Rahmen ist jedoch etwas größer als die Höhe des Hohlraumes in der Pressform. Das Polymermaterial wird dann unter Anwendung von Hitze und Druck aufgeschmolzen. Durch den Pressdruck wird die Höhe der Rahmen auf jene der Pressform reduziert, hierdurch imprägniert das Polymer den peripheren Bereich des Gasverteilersubstrates durchgehend bis zur Membran und umfaßt die freiliegende Oberfläche der Membran und das/die Gasverteilersubstrat(e) stoffschlüssig. Das Dichtungsmaterial sollte dabei den Randbereich der MEE bis zu einer Tiefe von mindestens 1 mm, vorzugsweise mindestens 2 mm durchdringen. So werden sehr gute Ergebnisse hinsichtlich der Druckstabilität erzielt.

Das gleiche Ergebnis kann durch den Einsatz von polymeren Dichtungsmaterialien in flüssiger Form erreicht werden. Der Eindringbereich des Dichtungsmaterials kann dabei durch dessen Viskosität und Benetzungseigenschaften gesteuert werden. Die Aushärtung des polymeren Dichtungsmaterials kann je nach Polymertyp durch Kontakt mit Luftfeuchtigkeit und/oder bei erhöhter Temperatur stattfinden.

Die Erfindung wird durch die folgenden Beispiele dargestellt, ohne jedoch darauf beschränkt zu sein.

### BEISPIELE

### Beispiel 1

### Herstellung einer Elektrolyse-MEE (4-lagiger Aufbau)

Zur Herstellung der 4-lagigen Elektrolyse-MEE (vgl. **Figur 1****,** jedoch ohne Gasverteilersubstrat (5)) wird in einem ersten Schritt eine einseitig beschichtete Membran gefertigt. Die entsprechende Membran (Nafion® N 117, Du Pont ) wird mittels Siebdruckverfahren nach EP 1 1027 385 ganzflächig mit einem Anodenkatalysator beschichtet. Es wird ein Iridiumoxidpulver (BET-Oberfläche ca. 30 m²/g, Fa. Umicore) eingesetzt. Die Katalysatortinte hat die folgende Zusammensetzung:

| | |
|---|---|
| 44,4 gr | Iridiumoxidpulver (Fa. Umicore) |
| 46,0 gr | Nafion® - Lösung (10 Vol. % in Wasser, Fa. DuPont) |
| 9,6 gr | Lösungsmittel Propylenglykol |
| 100,0 gr | |

Die Katalysatorbeladung beträgt 2 mg Ir/cm². Anschließend wird die katalysatorbeschichtete Membran bei 90 °C getrocknet. Das benötigte Format (Stanzmaß 5 x 5 cm; aktive Fläche 25 cm²) wird dann so ausgestanzt, daß die Membran auf einer Seite vollflächig mit Katalysator beschichtet ist.

In einem zweiten Schritt wird auf der Basis eines Gasverteilersubstrates (Sigracet 30 BC, hydrophobiert, mit Ausgleichsschicht; Fa. SGL, Meitingen) eine Elektrode gefertigt. Hierzu beschichtet man das Gasverteilersubstrat mittels Siebdruckverfahren mit einer Paste, die folgende Zusammensetzung besitzt:

| | |
|---|---|
| 18,5 gr | Pt/C-Katalysator (60 Gew. % Platin auf Ruß; Fa. Umicore) |
| 55,0 gr | Nafion® (10 Gew.% in Wasser, Fa. DuPont) |
| 26,5 gr | Propylenglykol |
| 100,0 gr | |

Die Katalysatorbeladung beträgt 0,57 mg Pt/cm² . Anschließend wird das Gasverteilersubstrat bei 110 °C getrocknet. Aus dem einseitig katalysatorbeschichteten Substrat wird ein Format (Stanzmaß 4,7 x 4,7 cm, aktive Fläche 22,1 cm²) ausgestanzt, so daß die erhaltene Elektrode vollflächig mit Katalysator beschichtet ist.

In einem dritten Schritt wird eine 4-lagige MEE hergestellt, indem man die beschichtete Membran und das beschichtete Gasverteilersubstrat derart miteinander laminiert, daß die Katalysatorschicht des Gasverteilersubstrates auf der noch unbeschichteten Seite der Membran angebunden wird. Um die Peripherie der Anordnung herum ergibt sich damit ein 1,5 mm breiter Rand von freier Membran. Die Laminierung erfolgt bei 150 °C mit einem Druck von 150 N/cm².

Im vierten Schritt wird die beschriebene MEE mit einem Rahmen aus Dichtungsmaterial versehen, das den Einbau in den Elektrolyseur und die gute Abdichtung ermöglicht. Es kommt ein Preßwerkzeug zum Einsatz, welches eine Aussparung der Maße 120 x 120 x 0,5 mm³ aufweist. In diese Aussparung wird die 4-lagige MEA zusammen mit zwei Rahmen aus Vestamelt® (Polyamid; Fa. Degussa, Duesseldorf) eingelegt. Die Rahmen haben jeweils ein Außenmaß von 11 x 11 cm und eine Höhe von 0,29 mm. Ein Rahmen hat ein Innenmaß von 4,7 x 4,7 cm, der andere eines von 5 x 5 cm. Das beschickte Preßwerkzeug wird in eine Heißpresse eingelegt und für 60 Sekunden mit einer Heizflächentemperatur von 170 °C beaufschlagt. Am Ende der Preßzeit wird eine Preßkraft von mindestens 10 Tonnen erreicht. Nach dem Abkühlen der Preßform wird die Elektrolyse-MEE entnommen und auf Endmaß fertig gestanzt.

Zwei nach diesem Verfahren hergestellte MEEs wurden anodenseitig mit jeweils einer Titansinterplatte (SIKA-T10®, Dicke 2 mm; Fa. GKN, Radevormwald) der Maße 4,9 x 4,9 cm zusammengefügt und in eine Elektrolysezelle eingebaut. Bei einer Zelltemperatur von 80 °C wird jeweils drucklos eine Strom/Spannungskurve aufgenommen. Man erhält die folgenden Werte für die Elektrolysespannung bei verschiedenen Stromdichten:

| Proben-Nr. | Spannung @ 600 mA/cm² | Spannung @ 1000 mA/cm² |
|---|---|---|
| 1 | 1805 mV | 1987 mV |
| 2 | 1808 mV | 1984 mV |

### Beispiel 2

### Herstellung einer Elektrolyse-MEE (5-lagiger Aufbau, semi-coextensives Design)

Die Herstellung einer 5-lagigen Elektrolyse-MEE (vgl. **Figur 2**) erfolgt prinzipiell wie in Beispiel 1 beschrieben. Jedoch wird auf der Anodenseite ein nichtkohlenstoff-basiertes Gasverteilersubstrat (in diesem Falle eine poröse Vliesstruktur der Abmessungen 5 x 5 cm, Dicke 0,09 mm, hergestellt aus Titanfasern Bekinit®, Fa. Baekaert, Zwevegem, Niederlande) direkt auf der Anodenkatalysatorschicht platziert, bevor der vierte Schritt (d.h. das Anbringen des Dichtungsmaterials) vorgenommen wird. Die Gesamthöhe der Rahmen aus Dichtungsmaterial wird um die Dicke des Titan-Vlieses gegenüber dem Beispiel 1 erhöht.

Es kommt wiederum ein Preßwerkzeug zum Einsatz, in dessen Aussparung die 5-lagige MEE zusammen mit zwei Rahmen aus Vestamelt® (Fa. Degussa, Duesseldorf) eingelegt wird. Die Rahmen haben jeweils ein Außenmaß von 11 x 11 cm. Ein Rahmen hat ein Innenmaß von 4,7 x 4,7 cm und eine Höhe von 0,29 mm. Der andere Rahmen hat ein Innenmaß von 5 x 5 cm und eine Höhe von 0,38 mm. Das beschickte Preßwerkzeug wird in eine Heißpresse eingelegt und für 60 Sekunden mit einer Heizflächentemperatur von 170 °C beaufschlagt. Am Ende der Preßzeit wird eine Preßkraft von mindestens 10 Tonnen erreicht. Nach dem Abkühlen der Preßform wird das Werkstück entnommen und auf Endmaß fertig gestanzt. Man erhält eine druckstabile, im Randbereich dichte Elektrolyse-MEE, die direkt in einen PEM-Wasserelektrolyseur eingebaut werden kann.

## Patentansprüche

1. Membran-Elektroden-Einheit zur Elektrolyse von Wasser aufweisend
- eine ionenleitende Membran mit Vorder- und Rückseite (1)
- eine erste Katalysatorschicht auf der Vorderseite (2)
- ein erstes Gasverteilersubstrat auf der Vorderseite (4)
- eine zweite Katalysatorschicht auf der Rückseite (3)
- ein zweites Gasverteilersubstrat auf der Rückseite (5) wobei das erste Gasverteilersubstrat (4) eine geringere flächige Ausdehnung als die ionenleitende Membran (1) und das zweite Gasverteilersubstrat (5) im wesentlichen die gleiche flächige Ausdehnung wie die ionenleitende Membran (1) aufweist,
wobei die ionenleitende Membran (1) auf der Vorderseite eine nicht von einem Gasverteilersubstrat gestützte freie Oberfläche (6) aufweist und
wobei der Rand der Gasverteilersubstrate (4, 5) und die nicht von einem Gasverteilersubstrat gestützte freie Oberfläche (6) der ionenleitenden Membran (1) mit einem Dichtungsmaterial (7) umfasst sind, das den Randbereich der Membran-Elektroden-Einheit bis zu einer Tiefe von mindestens, 1 mm durchdringt..

2. Membran-Elektroden-Einheit nach Anspruch 1, wobei die Katalysatorschicht auf der Vorderseite (2) und die Katalysatorschicht auf der Rückseite (3) der ionenleitenden Membran (1) unterschiedliche flächige Ausdehnung aufweisen.

3. Membran-Elektroden-Einheit nach einem der Ansprüche 1 oder 2, wobei die Katalysatorschichten auf der Vorderseite (2) und auf der Rückseite (3) edelmetallhaltige Katalysatoren und gegebenenfalls ionenleitende Materialien aufweisen.

4. Membran-Elektroden-Einheit nach einem der Ansprüche 1 bis 3, wobei das Gasverteilersubstrat auf der Vorderseite (4) kohlenstoffbasierte Materialien wie graphitiertes oder carbonisiertes Kohlefaserpapier, Kohlefaservlies, Kohlefasergewebe und/oder ähnliche Materialien aufweist, während das Gasverteilersubstrat auf der Rückseite (5) nicht-kohlenstoffbasierte Materialien wie Metallgewebe, Metallvliese, Netze, Metall-Stapelfasern, Metall-Multifilamente und/oder andere poröse metallische Strukturen aufweist.

5. Membran-Elektroden-Einheit nach einem der Ansprüche 1 bis 4, wobei die ionenleitende Membran organische Polymere, wie beispielsweise protonenleitende perfluorierte polymere Sulfonsäureverbindungen, dotierte Polybenzimidazole, Polyetherketone, Polysulfone oder ionenleitende keramische Materialien aufweist und eine Dicke von 10 bis 200 µm aufweist.

6. Membran-Elektroden-Einheit nach einem der Ansprüche 1 bis 5, wobei die zweite Katalysatorschicht auf der Rückseite (3) edelmetallhaltige Katalysatoren zur anodischen Sauerstoffentwicklung, vorzugsweise auf der Basis von Iridium und/oder Ruthenium aufweist.

7. Membran-Elektroden-Einheit nach einem der Ansprüche 1 bis 6, wobei das Dichtungsmaterial (7) thermoplastische Polymere aus der Gruppe Polyethylen, Polypropylen, Polytetrafluorethylen, PVDF, EPDM, Polyester, Polyamid, Polyamidelastomere, Polyimid, Polyurethan, Silicone, Siliconelastomere etc. und/oder duroplastische Polymere aus der Gruppe Epoxide und Cyanacrylate aufweist.

8. Verfahren zur Herstellung der Membran-Elektroden-Einheit nach Anspruch 1 bis 7, aufweisend die Schritte:
(a) einseitige Beschichtung einer Ionomermembran (1) mit Katalysator,
(b) einseitige Beschichtung eines kohlenstoffbasierten Gasverteilersubstrates (4) mit Katalysator,
(c) Verbinden des kohlenstoffbasierten, katalysatorbeschichteten Gasverteilersubstrates (4) mit der unbeschichtete Seite der Ionomermembran (1), wobei die Katalysatorschicht (2) in Kontakt mit der Ionomermembran (1) kommt,
(d) Aufbringen eines nicht-kohlenstoffbasierten Gasverteilersubstrates (5) auf die Rückseite, wobei die Katalysatorschicht (3) auf der Ionomermembran (1) in Kontakt mit dem Gasverteilersubstrat (5) kommt, und
(e) Anbringen eines Dichtungsmaterials (7) den Randbereich der Membran-Elektroden-Einheit wobei das Dichtungsmaterial (7) den Randbereich der Membran-Elektroden-Einheit bis zu einer Tiefe von mindestens 1mm durchdringt.

9. Verfahren nach Anspruch 8, wobei das Verbinden des kohlenstoffbasierten, katalysatorbeschichteten Gasverteilersubstrates (4) mit der unbeschichteten Seite der Ionomermembran (1) bei erhöhter Temperatur und/oder erhöhtem Druck erfolgt.

10. Verfahren nach Anspruch 8 oder 9, wobei das Anbringen des Dichtungsmaterials (7) durch Schmelzverfahren, Spritzgussverfahren, Wärmeimpulsschweissen und/oder Heisspressverfahren erfolgt.

11. Verwendung der Membran-Elektoden-Einheit nach einem der Ansprüche 1 bis 7 in elektrochemischen Vorrichtungen wie Elektrolyseuren und regenerativen Brennstoffzellen.

## Claims

1. A membrane electrode assembly for electrolysis of water comprising:
- an ion conducting membrane having a front and back side (1,
- a first catalyst layer on the front side (2),
- a first gas distribution substrate on the front side (4),
- a second catalyst layer on the back side (3),
- a second gas distribution substrate on the back side (5),
wherein the first gas distribution substrate (4) comprises a smaller surface extension than the ion conducting membrane (1) and the second gas distribution substrate (5) substantially comprises the same surface extension as the ion conducting membrane (1); wherein the ion conducting membrane (1) comprises a free surface (6) on the front side, said free surface not being supported by a gas distribution substrate, and
wherein the edge of the gas distribution substrates (4, 5) and the free surface (6) of the ion conducting membrane (1) not being supported by a gas distribution substrate are enclosed by a sealing material (7) which permeates the edge region of the membrane electrode assembly up to a depth of at least 1 mm.

2. The membrane electrode assembly according to claim 1, wherein the catalyst layer on the front side (2) and the catalyst layer on the back side (3) of the ion conducting membrane (1) comprise different surface extensions.

3. The membrane electrode assembly according to any one of claim 1 or 2, wherein the catalyst layers on the front side (2) and on the back side (3) comprise catalysts comprising noble metals and optionally ion conducting materials.

4. The membrane electrode assembly according to any one of claims 1 to 3, wherein the gas distribution substrate on the front side (4) comprises carbon-based materials like graphitized or carbonized carbon fibre paper, non-woven carbon fibre material, woven carbon fibre material and/or similar materials while the gas distribution substrate on the back side (5) comprises non-carbon-based materials like woven metal fabric, non-woven metal fabric, webs, metal staple fibres, metal multifilaments and/or other porous metal structures.

5. The membrane electrode assembly according to any one of claims 1 to 4, wherein the ion conducting membrane comprises organic polymers like, for example, proton conducting perfluorized polymeric sulfonic acid compounds, doted polybenzimidazoles, polyether cetones, polysulfones, or ion conducting ceramic materials and has a thickness of 10 to 200 µm.

6. The membrane electrode assembly according to any one of claims 1 to 5, wherein the second catalyst layer on the back side (3) comprises catalysts comprising noble metals for generating oxygen on the anode-side preferably on the basis of iridium and/or ruthenium.

7. The membrane electrode assembly according to any one of claims 1 to 6, wherein the sealing material (7) comprises thermoplastic polymers selected from the group of polyethylene, polypropylene, polytetrafluorethylene, PVDF, EPDM, polyester, polyamide, polyamide elastomer, polyimide, polyurethane, silicones, silicone elastomers etc., and/or thermosetting polymers selected from the group of epoxids and cyanacrylates.

8. A method for manufacturing a membrane electrode assembly according to claims 1 to 7, comprising the steps of:
(a) coating an ionomer membrane (1) with a catalyst on one side,
(b) coating a carbon-based gas distribution substrate (4) with a catalyst on one side,
(c) bonding the carbon-based, catalyst-coated gas distribution substrate (4) to the uncoated side of the ionomer membrane (1), wherein the catalyst layer (2) is brought into contact with the ionomer membrane (1),
(d) applying a non-carbon-based gas distribution substrate (5) to the back side, wherein the catalyst layer (3) on the ionomer membrane (1) is brought into contact with the gas distribution substrate (5), and
(e) applying a sealing material (7) onto the edge region of the membrane electrode assembly wherein the sealing material (7) permeates the edge region of the membrane electrode material up to a depth of at least 1 mm.

9. The method according to claim 8, wherein the bonding of the carbon-based, catalyst-coated gas distribution substrate (4) to the uncoated side of the ionomer membrane (1) is performed at an elevated temperature and/or an elevated pressure.

10. The method according to claim 8 or 9, wherein the sealing material (7) is applied by melting, injection moulding, thermal impulse welding and/or thermal pressure.

11. Using the membrane electrode assembly according to any one of claims 1 to 7 in electro-chemical devices like electrolysers and regenerative fuel cells.

## Revendications

1. Unité d'électrodes à membrane pour l'électrolyse de l'eau comportant :
- une membrane (1) conduisant les ions ayant une face avant et une face arrière,
- une première couche de catalyseur (2) située sur la face avant,
- un premier substrat répartiteur de gaz (4) situé sur la face avant,
- une seconde couche de catalyseur (3) située sur la face arrière,
- un second substrat répartiteur de gaz (5) situé sur la face arrière,
le premier substrat répartiteur de gaz (4) ayant une plus petite étendue de surface que la membrane (1) conduisant les ions, et le second substrat répartiteur de gaz (5) ayant essentiellement la même étendue de surface que la membrane conduisant les ions (1), la membrane (1) conduisant les ions comportant, sur sa face avant une surface libre (6) contre laquelle ne s'appuie pas un substrat répartiteur de gaz, et les bords des substrats répartiteurs de gaz (4, 5) et la surface libre (6) de la membrane (1) conduisant les ions contre laquelle ne s'appuie pas un substrat répartiteur de gaz étant entourés d'un matériau d'étanchéité (7), qui pénètre dans la zone de bord de l'unité d'électrodes à membrane jusqu'à une profondeur d'au moins 1 mm.

2. Unité d'électrodes à membrane selon la revendication 1, dans laquelle la couche de catalyseur (2) située sur la face avant de la membrane (1) conduisant les ions et la couche de catalyseur (3) située sur la face arrière de cette membrane (1) présentent des étendues de surface différentes.

3. Unité d'électrodes à membrane selon l'une des revendications 1 et 2, dans laquelle les couches de catalyseur (2, 3) situées sur la face avant et sur la face arrière de la membrane (1) conduisant les ions renferment des catalyseurs renfermant des métaux précieux et le cas échéant des matériaux conduisant les ions.

4. Unité d'électrodes à membrane selon l'une des revendications 1 à 3, dans laquelle le substrat répartiteur de gaz (4) situé sur la face avant de la membrane (1) conduisant les ions renferme des matériaux à base de carbone tels que du papier de fibres de carbone graphité ou carbonisé, un voile de fibres de carbone, un tissu de fibres de carbone et/ou des matériaux similaires, tandis que le substrat répartiteur de gaz (5) situé sur la face arrière de la membrane (1) conduisant les ions renferme des matériaux qui ne sont pas à base de carbone, tels qu'un tissu métallique, un voile métallique, des grilles, des fibres métalliques empilées, des multi filaments métalliques et/ou d'autres structures métalliques poreuses.

5. Unité d'électrodes à membrane selon l'une des revendications 1 à 4, dans laquelle la membrane conduisant les ions renferme des polymères organiques, tels que par exemple des dérivés d'acide sulfonique polymères perfluorés conduisant les protons, des polybenzimidazols dopés, des polyéthercétones, des polysulfones ou des matériaux céramiques conduisant les ions, et présente une épaisseur de 10 à 200 µm.

6. Unité d'électrodes à membrane selon l'une des revendications 1 à 5, dans laquelle la seconde couche de catalyseur (3) située sur la face arrière de la membrane conduisant les ions renferme des catalyseurs à base de métaux précieux pour la formation d'oxygène anodique, de préférence à base d'iridium et/ou de ruthénium.

7. Unité d'électrodes à membrane selon l'une des revendications 1 à 6, dans laquelle le matériau d'étanchéité (7) renferme des polymères thermoplastiques choisis dans le groupe formé par le polyéthylène, le polypropylène, le polytétrafluorethylène, le PVDF, l'EPDM, le polyester, le polyamide, les élastomères à base de polyamide, le polyimide, le polyuréthane, le silicone, les élastomères à base de silicone... et/ou des polymères thermodurcissable choisis dans le groupe formé par les epoxides et les cyanoacrylates.

8. Procédé d'obtention de l'unité d'électrodes à membrane conforme à l'une des revendications 1 à 7, comportant les étapes consistant à :
a) revêtir une face d'une membrane ionomère (1) d'un catalyseur,
b) revêtir une face d'un substrat (4) répartiteur de gaz à base de carbone d'un catalyseur,
c) relier le substrat répartiteur de gaz (4) à base de carbone revêtu d'un catalyseur et la face non revêtue de la membrane ionomère (1), la couche de catalyseur (2) venant en contact avec la membrane ionomère (1),
d) appliquer un substrat répartiteur de gaz (5) qui n'est pas à base de carbone sur la face arrière de la membrane ionomère (1), la couche de catalyseur (3) située sur cette membrane ionomère (1) venant en contact avec le substrat répartiteur de gaz (5), et
e) appliquer un matériau d'étanchéité (7) dans la zone de bord de l'unité d'électrodes à membrane, ce matériau d'étanchéité (7) pénétrant la zone de bord de l'unité d'électrodes à membrane jusqu'à une profondeur d'au moins 1 mm.

9. Procédé conforme à la revendication 8, selon lequel la liaison du substrat répartiteur de gaz (4) à base de carbone revêtu de catalyseurs et de la face non revêtue de la membrane ionomère (1) est réalisée à température augmentée et/ou sous pression augmentée.

10. Procédé conforme à la revendication 8 ou à la revendication 9, selon lequel l'application du matériau d'étanchéité (7) est réalisée par un procédé de fusion, par un procédé de moulage par injection, par un procédé de soudage par pulsation à chaud et/ou par un procédé de compression à chaud.

11. Utilisation de l'unité d'électrodes à membrane selon l'une des revendications 1 à 7, dans des dispositifs électrochimiques tels que des cellules d'électrolyse, et des cellules de combustible à régénération.
